# EUROPEAN PATENT APPLICATION

(11) **EP 4 676 096 A1**
(43) Date of publication of application: **07.01.2026**
(21) Application number: 25186603.4
(22) Date of filing: 01.07.2025
(51) Int. Cl.: H04S 3/02, H04S 3/00

(54) **SIGNAL PROCESSING METHOD, SIGNAL PROCESSING DEVICE, COMPUTER PROGRAM, AND AUDIO SYSTEM**

(30) Priority: 03.07.2024 JP 2024107511
(71) Applicant: YAMAHA CORPORATION, Hamamatsu-shi, Shizuoka 430-8650 (JP)
(72) Inventor: SHIDOJI, Hiroomi, Hamamatsu-shi, Shizuoka-Ken, 430-8650 (JP); HASHIMOTO, Dai, Hamamatsu-shi, Shizuoka-Ken, 430-8650 (JP)
(74) Representative: Hoffmann Eitle

(57) **Abstract**

A signal processing method assigning each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and based on results of assignment of each of the plurality of sound sources, generates, from a plurality of sound source signals corresponding to respective ones of the plurality of sound sources, a plurality of first sound signals corresponding to respective ones of the plurality of subwoofers.

## Description

### CROSS REFERENCE TO RELATED APPLICATION

This application is based on, and claims priority from, Japanese Patent Application No. 2024-107511, filed July 3, 2024, the entire content of which is incorporated herein by reference.

### BACKGROUND

### Technical Field

The present disclosure relates to a technique for processing a signal that represents (a) sound, for example.

### Background Information

Techniques have been developed for controlling a sound field in an acoustic space by assigning a plurality of sound signals to one or more speakers in the acoustic space (e.g., Japanese Translation of PCT International Application Publication No. JP-T-2008-507244). Moreover, techniques have also been developed for localizing a sound image of a sound source at a desired position in an acoustic space.

A subwoofer reproduces low-frequency sound components, and may be installed in an acoustic space together with one or more main speakers. Conventionally, subwoofers are used to increase loudness, and are not used for localization of a sound image. However, when there is a particular emphasis on sound image localization, such as when the sound image move within the acoustic space, use of conventional loud speakers (i.e., main speakers) alone is insufficient to adequately impart localization of low-frequency sound components.

### SUMMARY

In view of the circumstances described above, an object of an aspect of the present disclosure is to realize localization of a sound image for low-frequency sound components emitted by a subwoofer.

To achieve the object described above, a signal processing method according to one aspect of the present disclosure is implemented by a computer system and includes assigning each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and based on results of assignment of each of the plurality of sound sources, generating, from a plurality of sound source signals corresponding to respective ones of the plurality of sound sources, a plurality of first sound signals corresponding to respective ones of the plurality of subwoofers.

A signal processing device according to one aspect of the present disclosure includes a sound source assigner configured to assign each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and a signal processor configured to, based on results of assignment by the sound source assigner, generate, from a plurality of sound source signals corresponding to respective ones of the plurality of sound sources, a plurality of first sound signals corresponding to respective ones of the plurality of subwoofers.

A computer program according to one aspect of the present disclosure causes a computer system to function as a sound source assigner configured to assign each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and a signal processor configured to, based on results of assignment by the sound source assigner, generate, from a plurality of sound source signals corresponding to respective ones of the plurality of sound sources, a plurality of first sound signals corresponding to respective ones of the plurality of subwoofers.

An audio system according to one aspect of the present disclosure includes a plurality of subwoofers installed in an acoustic space; and a signal processing device. The signal processing device includes: a sound source assigner configured to assign each of a plurality of sound sources that correspond to different positions, to one or more subwoofers installed in an acoustic space, in which each of the plurality of sound sources is assigned based on a positional relation with each of the plurality of sound sources and a plurality of subwoofers installed in the acoustic space and including the one or more subwoofers; and a first sound processor configured to, based on results of assignment by the sound source assigner, generate, from a plurality of sound source signals corresponding to respective ones of the plurality of sound sources, a plurality of first sound signals corresponding to respective ones of the plurality of subwoofers.

### BRIEF DESCRIPTION OF THE DRAWINGS

Fig. 1 is a block diagram illustrating a configuration of an audio system according to a first embodiment;
Fig. 2 is a diagram explaining an arrangement of main speakers and subwoofers;
Fig. 3 is a block diagram illustrating a configuration of a signal processing device;
Fig. 4 is a block diagram illustrating a functional configuration of the signal processing device;
Fig. 5 is a block diagram illustrating a specific configuration of a bass processor;
Fig. 6 is a diagram explaining an operation of a sound source assigner;
Fig. 7 is a block diagram illustrating a specific configuration of an audio processor;
Fig. 8 is a flowchart of a sound field control process;
Fig. 9 is a diagram explaining an operation of a sound source assigner according to a third embodiment;
Fig. 10 is a diagram explaining an operation of a sound source assigner according to a fourth embodiment;
Fig. 11 is a block diagram illustrating a functional configuration of a signal processing device according to a fifth embodiment;
Fig. 12 is a block diagram illustrating a specific configuration of a reverberation processor;
Fig. 13 is a block diagram illustrating a configuration of a rear reverberation sound generator;
Fig. 14 is a diagram explaining a unit space; and
Fig. 15 is a block diagram illustrating a functional configuration of a signal processing device according to a modification.

### DETAILED DESCRIPTION

### A: First Embodiment

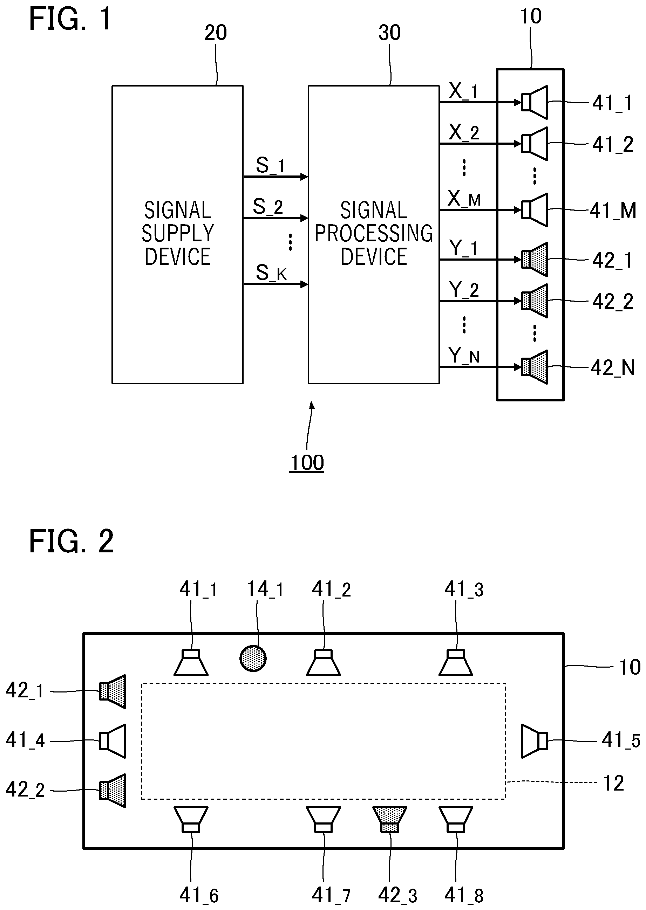

Fig. 1 is a block diagram illustrating a configuration of an audio system 100 according to a first embodiment of the present disclosure. The audio system 100 is a playback system capable of reproducing a sound, such as that of a vocalist, musical instrument, or a sound effect, in an acoustic space 10. The acoustic space 10 is any appropriate space, such as a concert hall. A listener is present in the acoustic space 10. The listener listens to the sound reproduced by the audio system 100.

The audio system 100 according to the first embodiment includes a signal supply device 20, a signal processing device 30, M main speakers 41_1 to 41_M, and N subwoofers 42_1 to 42_N (M and N are natural numbers of 2 or larger).

The signal supply device 20 outputs K-channel sound source signals S_1 to S_K corresponding to different sound sources 14_k (k = 1 to K) (K is a natural number of 2 or larger). Each sound source 14_k is a sound source such as a musical instrument or a vocalist. Each sound source signal S_k is a digital sound signal that represents a waveform of a sound that is emitted from the sound source 14_k.

Examples of the signal supply device 20 include a sound recording system that records a sound emitted from K sound sources 14_1 to 14_K, a sound reproduction system that can read each sound source signal S_k from a recording medium, a communication system that receives each sound source signal S_k from an external device via a communication network, etc. The signal supply device 20 can be mounted to the signal processing device 30. The signal supply device 20 can be a device external to the audio system 100.

The signal processing device 30 processes the K-channel sound source signals S_1 to S_K supplied from the signal supply device 20 to generate M-channel sound signals X_1 to X_M and N-channel sound signals Y_1 to Y_N. Each sound signal X_m (m = 1 to M) and each sound signal Y_n (n = 1 to N) are signals that represent a waveform of a sound. The number of channels M of the sound signal X_m is smaller than the number of channels K of the sound source signal S_k (M < K). Similarly, the number of channels N of the sound signal Y_n is smaller than the number of channels K of the sound source signal S_k (N < K). However, the number of channels (K, M, and N) of each signal may be freely changed.

Each sound signal X_m generated by the signal processing device 30 is supplied to any one of the M main speakers 41_1 to 41_M. A main speaker 41_m is a sound emitting device that emits a sound represented by the sound signal X_m. For convenience of illustration, a D/A converter that converts the sound signal X_m from digital to analog is not shown.

Each sound signal Y_n generated by the signal processing device 30 is supplied to any one of the N subwoofers 42_1 to 42_N. A subwoofer 42_n is a sound emitting device that emits a sound represented by the sound signal Y_n. For convenience of illustration, a D/A converter that converts the sound signal X_m from digital to analog is not shown. The number N of subwoofers 42_n is smaller than the number M of main speakers 41_m, for example. However, the numbers of M and N can be freely changed.

A subwoofer 42_n is a speaker that reproduces a lower-frequency sound than that of the main speaker 41_m. The subwoofer 42_n is, for example, a speaker that emits sound with a frequency of 200 Hz or lower (more specifically, 100 Hz or lower). The main speaker 41_m is a speaker that reproduces a higher frequency and broader range of sound than that of the subwoofer 42_n. As described above, the sound range of the sound signal Y_n is lower than that of the sound signal X_m. The range of sound emitted by the main speaker 41_m may overlap that of the subwoofer 42_n.

Fig. 2 is a diagram explaining an arrangement of the main speakers 41_m and the subwoofers 42_n. The M main speakers 41_1 to 41_M and the N subwoofers 42_1 to 42_n are installed in the acoustic space 10. The M main speakers 41_1 to 41_M are installed around a listening area 12 in the acoustic space 10. The listening area 12 is an area in which the listener is present in the acoustic space 10. Similarly, the N subwoofers 42_1 to 42_N are installed around the listening area 12 in the acoustic space 10.

The K sound sources 14_1 to 14_K are set at different positions in the acoustic space 10. Each sound source 14_k is a virtual object set at a desired position in the acoustic space 10. The signal processing device 30 generates the M-channel sound signals X_1 to X_M and the N-channel sound signals Y_1 to Y_N from the K-channel sound source signals S_1 to S_K such that the sound image of the sound source signal S_k corresponding to each sound source 14_k is localized at the position of the sound source 14_k in the acoustic space 10. Each sound signal X_m is an example of a "second sound signal," and each sound signal Y_n is an example of a "first sound signal."

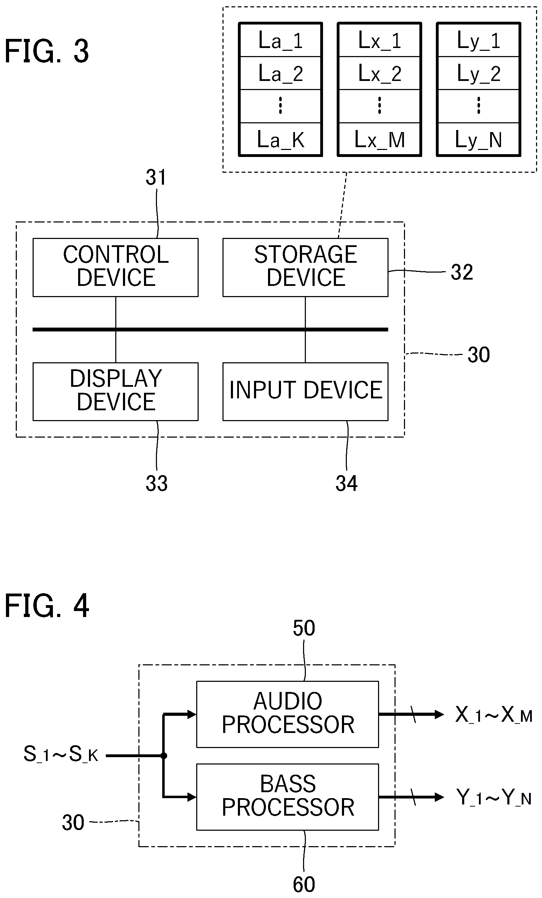

Fig. 3 is a block diagram illustrating a configuration of the signal processing device 30. The signal processing device 30 is implemented by an information device, such as a personal computer or a tablet terminal device. Specifically, the signal processing device 30 includes a control device 31, a storage device 32, a display device 33, and an input device 34. The signal processing device 30 may be a single device or a plurality of devices configured separately from each other.

The control device 31 comprises a single processor or a plurality of processors that controls each element of the signal processing device 30. Specifically, the control device 31 comprises one or more types of processors, such as a central processing unit (CPU), a sound processing unit (SPU), a digital signal processor (DSP), a field programmable gate array (FPGA), or an application specific integrated circuit (ASIC).

The storage device 32 comprises a single memory or a plurality of memories that store computer programs executed by the control device 31 and data used by the control device 31. The storage device 32 comprises a known recording medium, such as a magnetic recording medium or a semiconductor recording medium. The storage device 32 may comprise a combination of a plurality of types of recording media.

The storage device 32 according to the first embodiment stores K pieces of position information La_1 to La_K. The position information La_k indicates a position (e.g., coordinates) of the sound source 14_k in the acoustic space 10. The position information La_k is set based on a user input via the input device 34, for example. The position information La_k may be supplied from an external device, such as the signal supply device 20, to the signal processing device 30.

The storage device 32 also stores M pieces of position information Lx_1 to Lx_M and N pieces of position information Ly_1 to Ly _N. The position information Lx_m indicates a position (e.g., coordinates) of the main speaker 41_m in the acoustic space 10. The position information Ly_n indicates a position (e.g., coordinates) of the subwoofer 42_n in the acoustic space 10. The position information Lx_m and the position information Ly_n are set in advance based on a user input via the input device 34, for example.

The display device 33 displays images under the control of the control device 31. The input device 34 receives user inputs. The display device 33 provided separately from the signal processing device 30 can be connected by wire or wirelessly to the signal processing device 30. Similarly, the input device 34 provided separately from the signal processing device 30 can be connected by wire or wirelessly to the signal processing device 30.

Fig. 4 is a block diagram illustrating a functional configuration of the signal processing device 30. By executing a computer program stored in the storage device 32, the control device 31, realizes a plurality of functions (an audio processor 50 and a bass processor 60) to generate M-channel sound signals X_1 to X_M and N-channel sound signals Y_1 to Y_N based on K-channel sound source signals S_1 to S_K

The audio processor 50 generates M-channel sound signals X_1 to X_M corresponding to different main speakers 41_m based on K-channel sound source signals S_1 to S_K. The bass processor 60 generates N-channel sound signals Y_1 to Y_N corresponding to different subwoofers 42_n based on the K-channel sound source signals S_1 to S_K. As described above, the bass processor 60 processes the K-channel sound source signals S_1 to S_K, which have not yet been processed by the audio processor 50, to generate the N-channel sound signals Y_1 to Y_N.

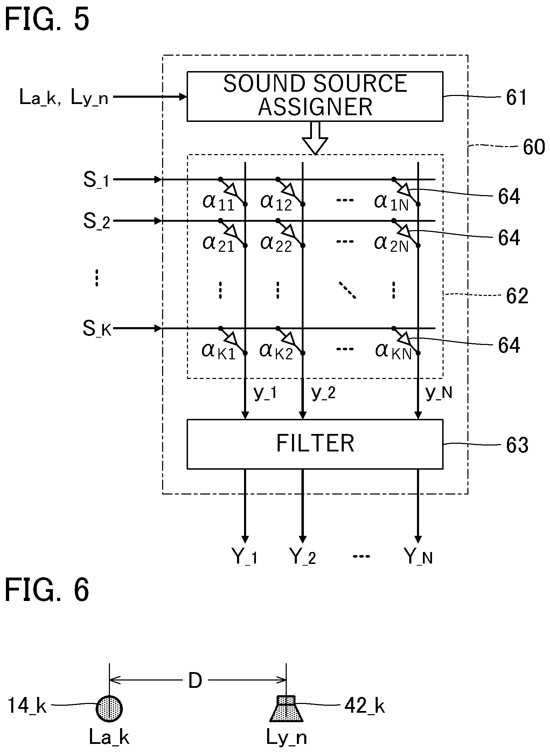

Fig. 5 is a block diagram illustrating a specific configuration of the bass processor 60. The bass processor 60 includes a sound source assigner 61, a signal processor 62, and a filter 63.

The sound source assigner 61 assigns each of the K sound sources 14_1 to 14_K corresponding to different positions in the acoustic space 10 to one or more subwoofers 42_n from among the N subwoofers 42_1 to 42_N. The K sound sources 14_1 to 14_K correspond one-to-one to the K-channel sound source signals S_1 to S_K. Accordingly, the assignment of a sound source 14_k to a subwoofer 42_n is also (expressed as) the assignment of a sound source signal S_k to the subwoofer 42_n. Specifically, the sound source assigner 61 assigns each sound source 14_k to one or more subwoofers 42_n based on the positional relation with the sound source 14_k, from among the N subwoofers 42_1 to 42_N in the acoustic space 10.

Fig. 6 is a diagram explaining an operation of the sound source assigner 61. The sound source assigner 61 according to the first embodiment assigns each of the K sound sources 14_1 to 14_K to a subwoofer 42_N closest to the sound source 14_k, from among the N subwoofers 42_1 to 42_n. Specifically, the sound source assigner 61 calculates a distance D between the sound source 14_k and each of the N subwoofers 42_1 to 42_N. The sound source assigner 61 assigns the sound source 14_k (sound source signal S_k) to a subwoofer 42_n that has a minimum distance D from the sound source 14_k, from among the N subwoofers 42_1 to 42_N. The distance D is, for example, a distance between the position indicated by the position information La_k of the sound source 14_k and the position indicated by the position information Ly_n of the subwoofer 42_n. The distance D between the sound source 14_k and the subwoofer 42_n is an example of the "positional relation" between the sound source 14_k and the subwoofer 42_n.

The signal processor 62 in Fig. 5 generates N-channel sound signals y_1 to y_N from the K-channel sound source signals S_1 to S_K, based on results of the assignment performed by the sound source assigner 61. Specifically, the signal processor 62 is a matrix mixer in which multiple (K × N) amplifiers 64 are arranged in a matrix with K rows × N columns. A sound source signal S_k is supplied to N amplifiers 64 that belong to the k-th row of the signal processor 62. An amplifier 64 that is positioned at the k-th row and the n-th column multiplies the sound source signal S_k by a gain αkn and outputs the signal resulting from the multiplication. A sound signal y_n is a signal obtained by adding the output signals of K amplifiers 64 that belong to the n-th column in the signal processor 62.

The gain αkn of the amplifier 64 positioned at the k-th row and the n-th column in the signal processor 62 is set based on a result of the assignment of the respective sound source 14_k to each subwoofer 42_n by the sound source assigner 61. For example, in a case in which one sound source 14_k is assigned to one subwoofer 42_n, the gain αkn of one amplifier 64 in the k-th row from among the K amplifiers 64 belonging to the n-th column is set to "1," and the gain α of the remaining (N - 1) amplifiers 64 is set to "0."

The filter 63 performs filtering on each of the N-channel sound signals y_1 to y_N to generate the sound signal Y_n. Specifically, the filter 63 according to the first embodiment is a low-pass filter. The low-pass filter extracts as the sound signal Y_n a low-frequency component of the sound signal Y_n that is reproducible by the subwoofer 42_n. As described above, each sound signal Y_n is a signal representative of a low-frequency component reproducible by the subwoofer 42_n. As illustrated in Fig. 1, each sound signal Y_n generated by the bass processor 60 is supplied to the subwoofer 42_n.

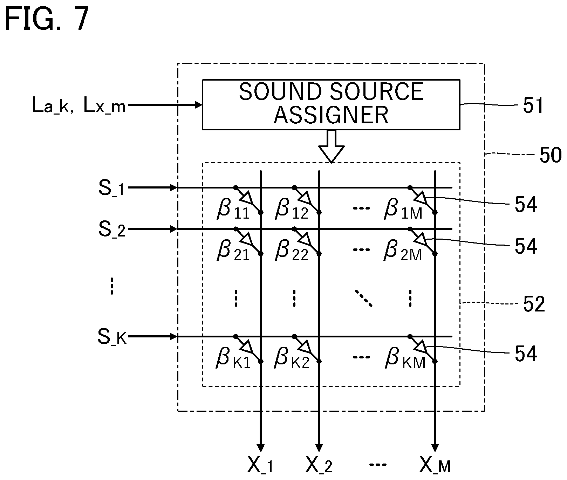

Fig. 7 is a block diagram illustrating a specific configuration of the audio processor 50. The audio processor 50 includes a sound source assigner 51 and a signal processor 52.

The sound source assigner 51 assigns each of the K sound sources 14_1 to 14_K corresponding to different positions in the acoustic space 10 to one or more main speakers 41_m from among the M main speakers 41_1 to 41_M. The assignment of the sound source 14_k to each main speaker 41_m is also the assignment of the sound source signal S_k to each main speaker 41_m. For example, the sound source assigner 51 assigns a sound source 14_k to one or more main speakers 41_m based on the positional relation with the sound source 14_k, from among the M main speakers 41_1 to 41_M in the acoustic space 10.

For example, the sound source assigner 51 assigns each of the K sound sources 14_1 to 14_K to two or more main speakers 41_m close to the sound source 14_k from among the M main speakers 41_1 to 41_M. The distance between the sound source 14_k and the main speaker 41_m is, for example, the distance between the position indicated by the position information La_k of the sound source 14_k and the position indicated by the position information Lx_m of the main speaker 41_m. Any known technique may be freely employed to assign the sound source 14_k to each main speaker 41_m. For example, panning, such as vector-based amplitude panning (VBAP) or distance-based amplitude panning (DBAP) can be used for the assignment performed by the sound source assigner 51.

The signal processor 52 in Fig. 7 generates the M-channel sound signals X_1 to X_M from the K-channel sound source signals S_1 to S_K based on the results of the assignment performed by the sound source assigner 51. Specifically, the signal processor 52 is a matrix mixer in which multiple (K × M) amplifiers 54 are arranged in a matrix with K rows × N columns. The sound source signal S_k is supplied to M amplifiers 54 belonging to the k-th row of the signal processor 52. The amplifier 54 positioned at the k-th row and the m-th column multiplies the sound source signal S_k by a gain βkm and outputs the signal resulting from the multiplication. The sound signal X_m is a signal obtained by adding the output signals of the K amplifiers 54 belonging to the m-th column in the signal processor 52.

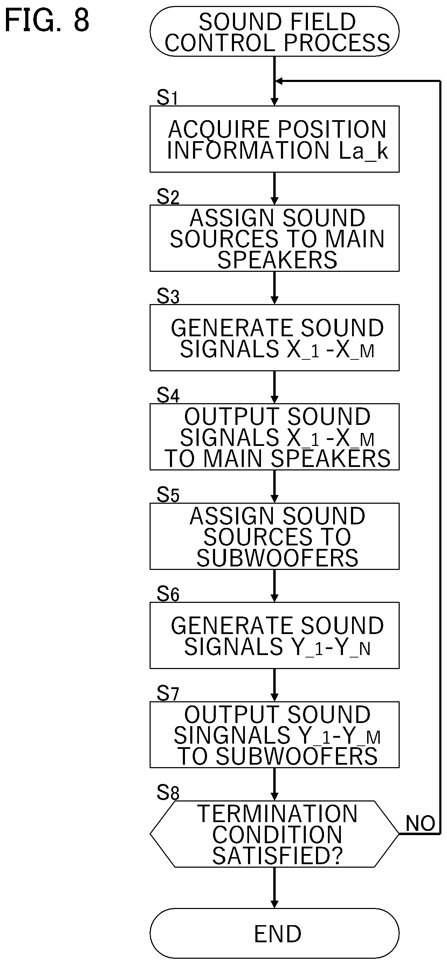

Fig. 8 is a flowchart of a process performed by the signal processing device 30 (hereinafter referred to as "sound field control process"). When the sound field control process is started, the control device 31 acquires the position information La_k of each of the K sound sources 14_1 to 14_K, i.e., each sound source 14_k (S1). The position information La_k of each sound source 14_k is updated at a point in time in parallel with the reproduction operation performed by the audio system 100.

The control device 31 (sound source assigner 51) assigns each of the K sound sources 14_1 to 14_K to one or more main speakers 41_m (S2). The control device 31 (signal processor 52) generates M-channel sound signals X_1 to X_M from the K-channel sound source signals S_1 to S_K based on the results of the assignment of the sound sources 14_k to the main speakers 41_m (S3). The control device 31 (signal processor 52) outputs each sound signal X_m to the corresponding main speaker 41_m (S4).

The control device 31 (sound source assigner 61) assigns each of the K sound sources 14_1 to 14_K to one or more subwoofers 42_n (S5). The control device 31 (signal processor 62) generates N-channel sound signals Y_1 to Y_N from the K-channel sound source signals S_1 to S_K based on the results of the assignment of the sound sources 14_k to the subwoofers 42_n (S6). The control device 31 (signal processor 62) outputs each sound signal Y_n to the corresponding subwoofer 42_n (S7). The order of the processing relating to the main speaker 41_m (S2 to S4) and the processing relating to the subwoofer 42_n (S5 to S7) may be reversed.

The control device 31 determines whether a predetermined termination condition is satisfied (S8). The termination condition is that termination of the sound field control process is instructed by an operation performed by the user via the input device 34, for example. If the termination condition is not satisfied (No at S8), the control device 31 performs the processing at Step S1 again. In other words, the acquisition of each position information La_k (S1), the generation of each sound signal X_m (S2 to S4), and the generation of each sound signal Y_n (S5 to S7) are repeated until the termination condition is satisfied. Therefore, the position of the sound image in the acoustic space 10 changes over time in parallel with the reproduction of the sound by the audio system 100. If the termination condition is satisfied (Yes at S8), the control device 31 terminates the sound field control process.

As described above, according to the first embodiment, the N-channel sound signals Y_1 to Y_N corresponding to the different subwoofers 42_n are generated from the K-channel sound source signals S_1 to S_K corresponding to the different sound sources 14_k based on the results of the assignment of each of the K sound sources 14_1 to 14_K to one or more subwoofers 42_n. Therefore, according to the first embodiment localization of the sound image can be achieved for the low-frequency acoustic components emitted by the N subwoofers 42_1 to 42_N.

A configuration is also assumed in which the M-channel sound signals X_1 to X_M generated by the audio processor 50 are processed to generate the N-channel sound signals Y_1 to Y_N (hereinafter referred to as "comparative example"), for example. In the comparative example, however, a sense of localization in the sound signals X_1 to X_M is reduced as a result of the signal processing by the audio processor 50, and a sense of localization in the sound signals Y_1 to Y_N is reduced as a result of cumulative execution of the signal processing by the bass processor 60. Therefore, it is difficult to adequately localize the sound image perceived by the listener when the sound signals Y_1 to Y_N are reproduced.

In contrast to the comparative example, the first embodiment uses the initial K-channel sound source signals S_1 to S_K not only to generate the M-channel sound signals X_1 to X_M but also to generate the N-channel sound signals Y_1 to Y_N. In other words, each sound source signal S_k that has not been processed by the audio processor 50 is processed by the bass processor 60 (signal processor 62). Therefore, compared with the comparative example where the sound signal Y_n is generated from each sound signal X_m, the listener can clearly perceive the localization of the sound image for the low-frequency acoustic components reproduced by each subwoofer 42_n.

The configuration by which each sound signal Y_n is generated by processing each sound signal X_m resulting from processing by the audio processor 50 is described above as a comparative example. The comparative example is not excluded from the scope of the present disclosure. In other words, the present disclosure includes the configuration in which each sound signal Y_n is generated by processing each sound signal X_m resulting from the processing by the audio processor 50.

In the first embodiment, each of the K sound sources 14_1 to 14_K is assigned to one subwoofer 42_n closest to the sound source 14_k. By this configuration the sound image for the low-frequency acoustic components can be localized while simplifying the process of generating the N-channel sound signals Y_1 to Y_N by the bass processor 60 (signal processor 62).

### B: Second Embodiment

A second embodiment of the present disclosure is described below. In the following aspects, elements having the same functions as those according to the first embodiment are denoted by the same reference numerals as used in the description of the first embodiment, and detailed description thereof is omitted as appropriate.

The second embodiment differs from the first embodiment with respect to the processing (S5) in which the sound source assigner 61 assigns each sound source 14_k to a different subwoofer 42_n. The configuration and operation other than the assignment of the sound source 14_k by the sound source assigner 61 are the same as those according to the first embodiment.

The sound source assigner 61 according to the first embodiment assigns each sound source 14_k to one subwoofer 42_n closest to the sound source 14_k in the acoustic space 10. The sound source assigner 61 according to the second embodiment assigns each of the K sound sources 14_1 to 14_K to two or more subwoofers 42_n from among the N subwoofers 42_1 to 42_N based on a distance D between the subwoofer 42_n and the sound source 14_k.

Specifically, for any combination of the sound source 14_k and the subwoofer 42_n, the sound source assigner 61 sets the gain αkn of each of the N amplifiers 54 belonging to the k-th row in the signal processor 62 to a large value when the distance D between the sound source 14_k and the subwoofer 42_n is small. As described above, the sound source assigner 61 according to the second embodiment assigns each sound source 14_k to the respective subwoofers 42_n by distance-based amplitude panning (DBAP).

The second embodiment achieves the same advantageous effects as those according to the first embodiment. However, in the second embodiment, each of the K sound sources 14_1 to 14_K is assigned to two or more subwoofers 42_n based on the distance D between the sound source 14_k and the subwoofer 42_n. Therefore, compared with the first embodiment in which the sound source 14_k is assigned to one subwoofer 42_n, according to the second embodiment the sound signal Y_n that is generated enables the listener to perceive a clear sound image for the low-frequency acoustic components emitted by each subwoofer 42_n.

### C: Third Embodiment

The third embodiment differs from the first embodiment with respect to the processing (S5) in which the sound source assigner 61 assigns each sound source 14_k to the subwoofer 42_n. The configuration and operation other than the assignment of the sound source 14_k by the sound source assigner 61 are the same as those according to the first embodiment.

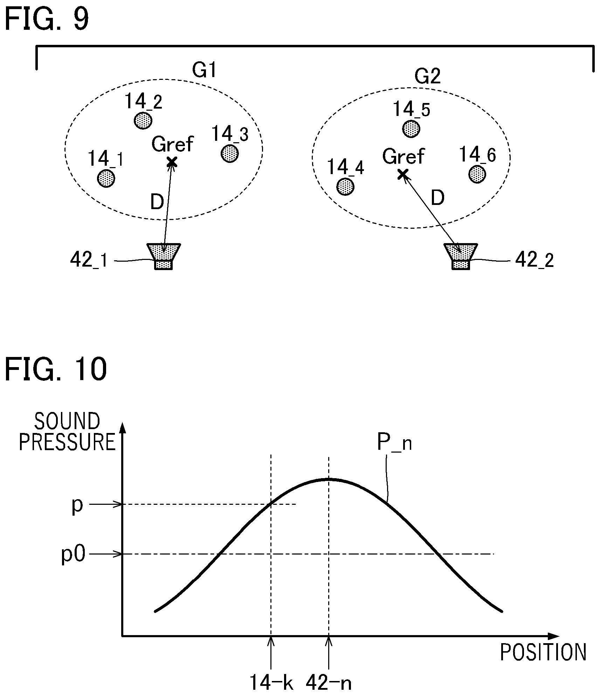

Fig. 9 is a diagram explaining the operation of the sound source assigner 61 according to the third embodiment. The sound source assigner 61 according to the third embodiment divides the K sound sources 14_1 to 14_K into a plurality of groups G (G1, G2, ...). For example, the sound source assigner 61 sets one or more sound sources 14_k present at positions close to each other in the acoustic space 10 as one group G. In Fig. 9, the sound sources 14_1 to 14_3 are classified as a group G1, and the sound sources 14_4 to 14_6 are classified as a group G2. A known clustering process is employed for the classification (that is, grouping) of the K sound sources 14_1 to 14_K.

The sound source assigner 61 assigns one or more sound sources 14_k belonging to each of the groups G to the subwoofer 42_n based on the positional relation between the group G and the subwoofer 42_n. Specifically, the sound source assigner 61 sets a reference position Gref for each of the groups G. The reference position Gref of each group G is a representative position of one or more sound sources 14_k belonging to the group G. For example, the reference position Gref is a point from which the sum of the distances to one or more sound sources 14_k belonging to the group G is the smallest.

Specifically, the sound source assigner 61 assigns one or more sound sources 14_k belonging to the group G to one subwoofer 42_n closest to the reference position Gref of the group G from among the N subwoofers 42_1 to 42_N. In other words, one or more sound sources 14_k of the group G are assigned to one subwoofer 42_n having the minimum distance D between the reference position Gref of the group G and the position indicated by the position information Ly_n, from among the N subwoofers 42_1 to 42_N.

The third embodiment achieves the same advantageous effects as those according to the first embodiment. However, in the third embodiment, the assignment of the sound source 14_k to each subwoofer 42_n is controlled using the group G into which the K sound sources 14_1 to 14_K are divided as a unit. Therefore, the third embodiment can reduce a load for assigning the sound source 14_k or generating the sound signal Y_n compared with a configuration that controls the assignment to the subwoofer 42_n individually for each of the K sound sources 14_1 to 14_K.

### D: Fourth Embodiment

The fourth embodiment differs from the first embodiment with respect to the processing (S5) in which the sound source assigner 61 assigns each sound source 14_k to the subwoofer 42_n. The configuration and operation other than the assignment of the sound source 14_k by the sound source assigner 61 are the same as those according to the first embodiment.

Fig. 10 is a diagram explaining the operation of the sound source assigner 61 according to the fourth embodiment. The storage device 32 according to the fourth embodiment stores a sound pressure distribution P_n for each of the N subwoofers 42_1 to 42_N. The sound pressure distribution P_n is a spatial distribution of sound pressure p associated with the sound waves emitted by the subwoofer 42_n based on a supplied predetermined reference signal. Each sound pressure distribution P_n is identified in advance by measuring the sound pressure p in the acoustic space 10, for example. Each sound pressure distribution P_n can be identified in advance by simulating the acoustic space 10. The sound source assigner 61 acquires the sound pressure distribution P_n for each of the N subwoofers 42_1 to 42_N from the storage device 32.

The sound source assigner 61 assigns each of the K sound sources 14_1 to 14_K to a subwoofer 42_n selected from the N subwoofers 42_1 to 42_N based on the positional relation between the sound source 14_k and the sound pressure distribution P_n. Specifically, in a case in which the sound pressure p at the position (position information La_k) of the sound source 14_k in the sound pressure distribution P_n exceeds a predetermined threshold p0 as illustrated in Fig. 10, the sound source assigner 61 assigns the sound source 14_k to the subwoofer 42_n corresponding to the sound pressure distribution P_n. In a case in which the sound pressure p at the position of the sound source 14_k in the sound pressure distribution P_n is below the threshold value p0, the sound source 14_k is not assigned to the subwoofer 42_n. As described above, one sound source 14_k is assigned to one or more subwoofers 42_n when the sound pressure p exceeds the threshold p0.

The fourth embodiment achieves the same advantageous effects as those according to the first embodiment. However, in the fourth embodiment, the assignment of the sound source 14_k to each subwoofer 42_n is controlled based on the positional relation between the sound source 14_k and the sound pressure distribution P_n. Therefore, the fourth embodiment can achieve localization of the sound image for the low-frequency acoustic components emitted by each subwoofer 42_n, taking into account actual acoustic characteristics of the acoustic space 10 in which the N subwoofers 42_1 to 42_N are installed.

### E: Fifth Embodiment

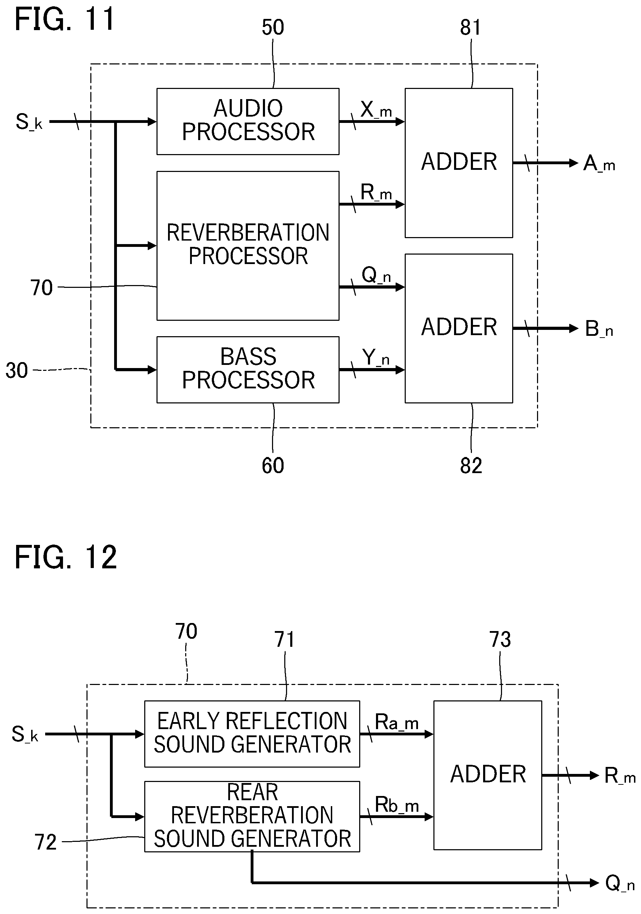

Fig. 11 is a block diagram illustrating a functional configuration of a signal processing device 30 according to a fifth embodiment. By executing the computer programs stored in the storage device 32, the control device 31 according to the fifth embodiment realizes a plurality of functions relating to sound reverberation (a reverberation processor 70, an adder 81, and an adder 82) as well as the same functions as those according to the first embodiment (the audio processor 50 and the bass processor 60).

The reverberation processor 70 generates reverberation signals R_m (R_1 to R_M) corresponding to the M main speakers 41_1 to 41_M, respectively, from the K-channel sound source signals S_1 to S_K. The sound signal X_m generated by the audio processor 50 corresponds to a direct sound that directly reaches the listening point from the sound source. In contrast, the reverberation signal R_m generated by the reverberation processor 70 corresponds to a reverberation sound that corresponds to the direct sound represented by the sound signal X_m.

Fig. 12 is a block diagram illustrating a specific configuration of the reverberation processor 70. The reverberation processor 70 includes an early reflection sound generator 71, a rear reverberation sound generator 72, and an adder 73.

The early reflection sound generator 71 generates M-channel early reflected signals Ra_1 to Ra_M from the K-channel sound source signals S_1 to S_K. Each early reflected signal Ra_m represents an early reflected sound that reaches the listening point after repeated reflections on wall surfaces of a virtual acoustic space different from the acoustic space 10. Specifically, the early reflection sound generator 71 generates the early reflected signals Ra_1 to Ra_M by simulating reflections on the wall surfaces in the virtual acoustic space using a virtual sound source corresponding to the sound source 14_k. Generation of the early reflected signals Ra_1 to Ra_M using the virtual sound source is disclosed in Japanese Patent Application Laid-Open Publication No. 2022-144496, for example.

The rear reverberation sound generator 72 generates M-channel rear reverberation signals Rb_1 to Rb_M and N-channel reverberation signals Q_1 to Q_N from the K-channel sound source signals S_1 to S_K. Each rear reverberation signal Rb_m and each reverberation signal Q_n represent a rear reverberation sound that follows the early reflected sound due to a large number of reflections (multiple reflections) on the wall surface of the virtual acoustic space different from the acoustic space 10.

The adder 73 adds the M-channel early reflection signals Ra_1 to Ra_M generated by the early reflected sound generator 71 and the M-channel rear reverberation signals Rb_1 to Rb_M generated by the rear reverberation sound generator 72. Specifically, the adder 73 generates the reverberation signal R_m (R_1 to R_M) by adding the early reflected signal Ra_m and the rear reverberation signal Rb_m.

As will be apparent from the above description, the reverberation sound represented by the reverberation signal R_m includes the early reflected sound (early reflected signal Ra_m) and the rear reverberation sound (rear reverberation signal Rb_m) each of which follow the direct sound represented by the sound signal X_m. The reverberation signal R_m is an example of a "second reverberation signal."

The adder 81 in Fig. 11 adds the M-channel sound signals X_1 to X_M generated by the audio processor 50 and the M-channel reverberation signals R_1 to R_M generated by the reverberation processor 70. Specifically, the adder 81 generates a sound signal A_m by adding the sound signal X_m and the reverberation signal R_m. In other words, the adder 81 generates M-channel sound signals A_1 to A_M corresponding to the different main speakers 41_m. Each sound signal A_m is supplied to the main speaker 41_m.

Each main speaker 41_m emits the sound represented by each sound signal A_m, thereby enabling the listener in the acoustic space 10 to perceive the sound image of the reproduced sound in which the direct sound is followed by the early reflected sound and the rear reverberation sound.

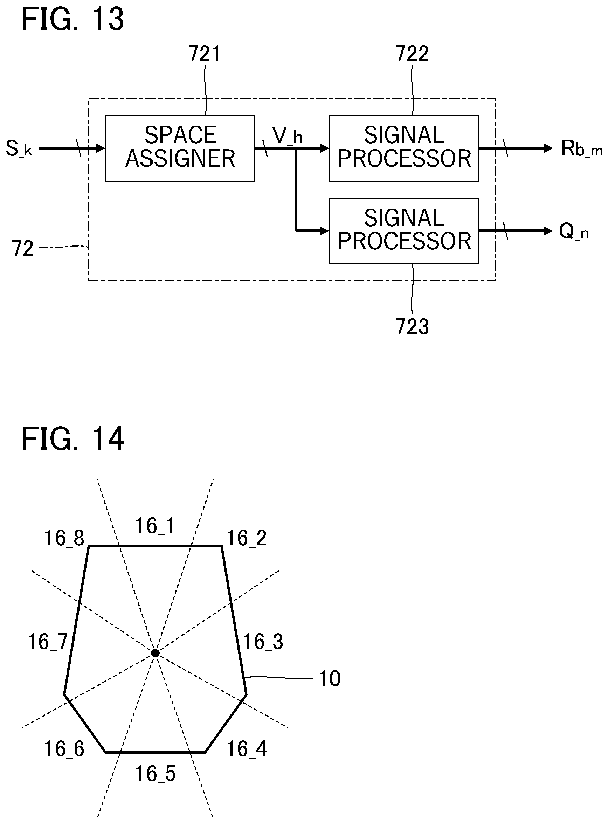

Fig. 13 is a block diagram illustrating the configuration of the rear reverberation sound generator 72. The rear reverberation sound generator 72 includes a space assigner 721, a signal processor 722, and a signal processor 723. As illustrated in Fig. 14, H (H = 8 in Fig. 14) unit spaces 16_1 to 16_H obtained by dividing the acoustic space 10 are assumed in the signal processing performed by the rear reverberation sound generator 72.

The space assigner 721 in Fig. 13 generates H-channel unit signals V_1 to V_H corresponding to the different unit spaces 16_h (h = 1 to H). Each unit signal V_h is a signal that represents a rear reverberation sound (to be observed) in the unit space 16_h. Specifically, the space assigner 721 generates the H-channel unit signals V_1 to V_H by processing the K-channel sound source signals S_1 to S_K. Generation of the unit signal V_h corresponding to each unit space 16_h is disclosed in Japanese Patent Application Laid-Open Publication No. 2022-144496.

The signal processor 722 generates M-channel rear reverberation signals Rb_1 to Rb_M from the H-channel unit signals V_1 to V_H. Specifically, the signal processor 722 is a matrix mixer (not illustrated) in which multiple amplifiers are arranged in a matrix with H rows × M columns. The gain of each amplifier is set based on the position of each sound source 14_k.

The signal processor 723 generates N-channel reverberation signals Q_1 to Q_N from the H-channel unit signals V_1 to V_H. Specifically, the signal processor 723 is a matrix mixer (not illustrated) in which multiple amplifiers are arranged in a matrix with H rows × N columns.

The signal processor 723 first refers to the position information Ly_n of each subwoofer 42_n to determine whether any one of the N subwoofers 42_1 to 42_N is present in each unit space 16_h of the acoustic space 10. In a case in which a subwoofer 42_n is present in the unit space 16_h, the signal processor 723 outputs a unit signal V_h corresponding to the unit space 16_h as the reverberation signal Q_n of the subwoofer 42_n.

As described above, the reverberation processor 70 according to the fifth embodiment generates the reverberation signals Q_n (Q_1 to Q_N) corresponding to the N subwoofers 42_1 to 42_N, respectively, from the K-channel sound source signals S_1 to S_K.

As described above, the reverberation sound represented by the reverberation signal R_m includes the early reflected sound (early reflected signal Ra_m) and the rear reverberation sound (rear reverberation signal Rb_m). In contrast, the reverberation sound represented by the reverberation signal Q_n includes the rear reverberation sound but does not include the early reflected sound. The reverberation signal Q_n is an example of a "first reverberation signal."

The adder 82 in Fig. 11 adds the N-channel sound signals Y_1 to Y_N generated by the bass processor 60 and the N-channel reverberation signals Q_1 to Q_N generated by the reverberation processor 70 (signal processor 723). Specifically, the adder 82 generates a sound signal B_n by adding the sound signal Y_n and the reverberation signal Q_n. In other words, the adder 82 generates N-channel sound signals B_1 to B_N corresponding to the different subwoofers 42_n. Each sound signal B_n is supplied to the subwoofer 42_n.

Each subwoofer 42_n emits the sound represented by each sound signal B_n, thereby enabling the listener in the acoustic space 10 to perceive the sound image of the low-frequency reproduced sound in which the direct sound is followed by the early reflected sound and the rear reverberation sound.

The fifth embodiment achieves the same advantageous effects as those according to the first embodiment. However, in the fifth embodiment, the sound signal Y_n and the reverberation signal Q_n of the reverberation sound are assigned to the subwoofer 42_n. Therefore, the fifth embodiment enables the listener to perceive spatial expansion due to the reverberation sound (especially, rear reverberation sound) in the sound reproduced by the N subwoofers 42_1 to 42_N.

Furthermore, in the fifth embodiment, the sound signal X_m and the reverberation signal R_m of the reverberation sound are assigned to the main speaker 41_m. Therefore, the fifth embodiment enables the listener to perceive spatial expansion due to the reverberation sound in the sound reproduced by the M main speakers 41_1 to 41_M. In the fifth embodiment, the K-channel sound source signals S_1 to S_K can be shared for generating the M-channel sound signals X_1 to X_M, the N-channel sound signals Y_1 to Y_N, the M-channel reverberation signals R_1 to R_M, and the N-channel reverberation signals Q_1 to Q_N.

In the fifth embodiment, the reverberation sound including the early reflected sound and the rear reverberation sound is reproduced by the M main speakers 41_1 to 41_M, thereby enabling the listener to effectively perceive spatial expansion including acoustic effects caused by early reflection. The rear reverberation sound tends to be less directionally perceptible than the early reflected sound. On the other hand, the low-frequency acoustic components reproducible by the subwoofer 42_n tend to be less directionally perceptible than the high-frequency acoustic components. Thus, according to the fifth embodiment, since the reverberation signal Q_n assigned to the subwoofer 42_n is composed of the rear reverberation sound, an advantage is obtained in that it is possible to reproduce the sound including the reverberation sound without excessively reducing a sense of direction of the reverberation signal Q_n.

The configuration and operation of the audio processor 50 and the bass processor 60 according to the fifth embodiment are the same as those according to the first embodiment. To perform the processing (S5) in which the sound source assigner 61 according to the fifth embodiment assigns each sound source 14_k to the subwoofer 42_n, any one of the second to the fourth embodiments may be employed.

### F: Modifications

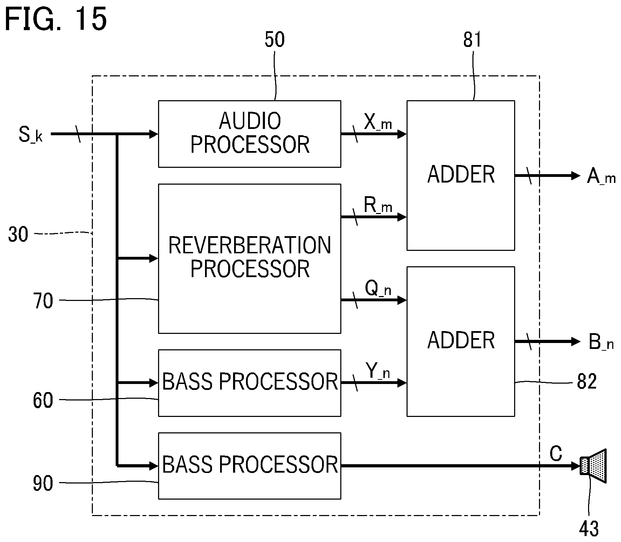

The following describes examples of specific modifications of the embodiments described above. Two or more aspects optionally selected from the aspects described below may be appropriately combined as long as they do not conflict with each other.
(1) In each of the embodiments described above, the sound source 14_k is assigned to the subwoofer 42_n based on the positional relation between the sound source 14_k and the subwoofer 42_n in the acoustic space 10. However, the configuration and method for assigning the sound source 14_k to each subwoofer 42_n are not limited to those described above. For example, the sound source assigner 61 may perform assignment of each sound source 14_k to each subwoofer 42_n (e.g., setting the gain αkn) based on a user input via the input device 34.
   In each of the embodiments described above, the sound source 14_k is assigned to the main speaker 41_m based on the positional relation between the sound source 14_k and the main speaker 41_m in the acoustic space 10. However, the configuration and method for assigning the sound source 14_k to each main speaker 41_m are not limited to those described above. For example, the sound source assigner 51 may perform assignment of each sound source 14_k to each main speaker 41_m (e.g., setting the gain βkm) based on a user input via the input device 34.
(2) In the fifth embodiment, the reverberation sound represented by the reverberation signal Q_n does not include the early reflected sound. The reverberation sound represented by the reverberation signal Q_n, however, may include both the rear reverberation sound and the early reflected sound.
(3) As illustrated in Fig. 15, a subwoofer 43 may be coupled to the signal processing device 30 to provide loudness in the low-frequency range. A bass processor 90 in Fig. 15 generates a monaural sound source signal by adding the K-channel sound source signals S_1 to S_K and extracts the low-frequency (e.g., 200 Hz or lower) acoustic components from the sound source signal to generate a low-frequency signal C. The low-frequency signal C corresponds to a low-frequency effect (LFE).
   The low-frequency signal C generated by the bass processor 90 is supplied to the subwoofer 43 to reproduce the low-frequency acoustic components that are less directionally perceivable by the listener. The configuration illustrated in Fig. 15 enables the listener to perceive the sound image of the low-frequency acoustic components by the N subwoofers 42_1 to 42_N while enhancing the loudness in the low-frequency range by the subwoofer 43.
(4) In the embodiments described above, the N subwoofers 42_1 to 42_N are installed around the listening area 12 in the acoustic space 10. However, the positions of the N subwoofers 42_1 to 42_N in the acoustic space 10 are not limited to those described above and may be optionally changed. Similarly, in the embodiments described above, the M main speakers 41_1 to 41_M are installed around the listening area 12. However, the positions of the M main speakers 41_1 to 41_M in the acoustic space 10 are not limited to those described above and may be optionally changed. For example, the N subwoofers 42_1 to 42_N or the M main speakers 41_1 to 41_M may be installed in an area positioned in one direction relative to the listening area 12, such as a stage in the acoustic space 10.
(5) As described in each of the embodiments above, the functions of the signal processing device 30 are implemented in coordination between one or a plurality of processors constituting the control device 31 and computer programs stored in the storage device 32. A computer program according to the present disclosure can be stored in a computer-readable recording medium and installed on a computer. The recording medium is, for example, a non-transitory recording medium. While the recording medium is preferably an optical recording medium (optical disc), such as a CD-ROM, the recording medium may be of any known form, such as a semiconductor recording medium or a magnetic recording medium. Examples of the non-transitory recording medium include any desired recording media except transitory, propagating signals, and does not exclude volatile recording media. In a configuration in which a distribution device distributes a computer program via a communication network, a storage medium that stores therein the computer program in the distribution device corresponds to the non-transitory storage medium described above.

### G: Appendices

The following aspects, for example, are derivable from the embodiments described above.

A signal processing method according to one aspect (aspect 1) of the present disclosure is a method implemented by a computer system and includes: assigning each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and based on results of assignment of each of the plurality of sound sources, generating, from a plurality of sound source signals corresponding to respective ones of the plurality of sound sources, a plurality of first sound signals corresponding to respective ones of the plurality of subwoofers.

According to this aspect, the first sound signals corresponding to the different subwoofers are generated from the sound source signals corresponding to the different sound sources based on the results of assigning each of the sound sources (sound source objects) to one or more subwoofers. Therefore, according to this aspect localization of a sound image can be achieved for the low-frequency acoustic components emitted by the subwoofers.

The phrase "generating a plurality of first sound signals" means, for example, generating the first sound signals from the sound source signals such that the sound image perceived by the listener from the sound of the first sound signal reproduced by the subwoofers is localized at the position of the sound source.

The signal processing method according to an example (aspect 2) of aspect 1 further includes generating from the plurality of sound source signals, a plurality of second sound signals corresponding to respective ones of a plurality of main speakers. According to this aspect, a plurality of initial sound source signals used to generate the second sound signals is used to generate the first sound signals. Therefore, compared with a configuration that uses the second sound signals to generate the first sound signals, a listener can clearly perceive localization of the sound image for low-frequency acoustic components emitted by the subwoofers.

The phrase "generating the plurality of second sound signals" means, for example, generating the second sound signals from the sound source signals such that the sound image perceived by the listener from the sound of the second sound signal reproduced by the main speakers is localized at the position of the sound source.

The signal processing method according to an example (aspect 3) of aspect 2, includes: generating, from the plurality of sound source signals, a plurality of first reverberation signals corresponding to the respective ones of the plurality of subwoofers; and, for each of the plurality of subwoofers, adding a corresponding first sound signal from among the plurality of the first sounds signals generated and a corresponding first reverberation signal from among the plurality of first reverberation signal generated. In this aspect, a first sound signal and a first reverberation signal representing a reverberation sound are assigned to a subwoofer. Therefore, this aspect enables the listener to perceive spatial expansion due to the reverberation sound in the sound reproduced by the subwoofers.

The signal processing method according to an example (aspect 4) of aspect 3 further includes: generating, from the plurality of sound source signals, a plurality of second reverberation signals corresponding to respective ones of the plurality of the main speakers; and, for each of the plurality of the main speakers, adding a corresponding second signal from among the plurality of the second sound signals generated and a corresponding second reverberation signal from among the plurality of second reverberation signals generated.. In this aspect, a second sound signal and a second reverberation signal representing a reverberation sound are assigned to a main speaker. Therefore, this aspect enables the listener to perceive spatial expansion due to the reverberation sound in the sound reproduced by the main speakers.

In an example (aspect 5) of aspect 4, a reverberation sound represented by the plurality of second reverberation signals includes an early reflected sound and a rear reverberation sound corresponding to a sound represented by the plurality of sound source signals, and a reverberation sound represented by the plurality of first reverberation signals includes the rear reverberation sound and does not include the early reflected sound. A sound including an early reflected sound and a rear reverberation sound is reproduced by the plurality of main speakers, thereby enabling the listener to effectively perceive spatial expansion including the effects caused by the early reflected sound. The rear reverberation sound tends to be less directionally perceptible than the early reflected sound. On the other hand, the low-frequency acoustic components that can be reproduced by the subwoofer tend to be less directionally perceptible than the high-frequency acoustic components. Accordingly, the aspect in which the first reverberation signal assigned to the subwoofer includes the rear reverberation sound can advantageously reproduce the sound including the reverberation sound without excessively reducing the sense of direction of the first reverberation signal.

In an example (aspect 6) of any one of aspects 1 to 5, the assigning of each of the plurality of sound sources includes assigning the sound source to a subwoofer closest to the sound source from among the plurality of subwoofers. In this aspect, each of the sound sources is assigned to one subwoofer. Therefore, the aspect can localize the sound image for the low-frequency acoustic components while simplifying the process of generating the first sound signals.

In an example (aspect 7) of any one of aspects 1 to 5, the assigning of each of the plurality of sound sources includes assigning the sound source to two or more subwoofers from among the plurality of subwoofers based on a distance from the sound source. In this aspect, each of the sound sources is assigned to two or more subwoofers based on the distance between the sound source and the subwoofer. Therefore, according to this aspect the first sound signals can be generated that enable the listener to perceive a clear sound image for the low-frequency acoustic components emitted by the subwoofers.

In an example (aspect 8) of any one of aspects 1 to 5, the assigning of each of the plurality of sound sources includes: dividing the plurality of sound sources into a plurality of groups; and assigning one or more sound sources belonging to each of the plurality of groups, to one or more subwoofers based on a positional relation between the plurality of subwoofers and each of the plurality of the groups. In this aspect, the assigning the sound sources to the subwoofers is controlled using the group into which the sound sources are divided as a unit. Therefore, according to this aspect the load for assigning the sound source or generating the first sound signal can be reduced compared with a configuration that controls the assigning each of the sound sources individually to the subwoofer.

In an example (aspect 9) of any one of aspects 1 to 5, the assigning of each of the plurality of sound sources includes: acquiring a sound pressure distribution for each of the plurality of subwoofers; and assigning each of the plurality of sound sources to one or more subwoofers from among the plurality of subwoofers, in which each of the plurality of sound sources is assigned based on a positional relation between each of the plurality of sound sources and the sound pressure distribution acquired for each of the plurality of subwoofers. In this aspect, the assigning the sound source to each subwoofer is controlled based on the positional relation between the sound source and the sound pressure distribution. Therefore, according to this aspect localization of the sound image can be achieved for the low-frequency acoustic components emitted by the subwoofers, taking into account the actual acoustic characteristics of the acoustic space in which the subwoofers are installed.

A signal processing device according to one aspect (aspect 10) of the present disclosure includes a sound source assigner configured to assign each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and a signal processor configured to, based on results of assignment by the sound source assigner, generate, from a plurality of sound source signals corresponding to respective ones of the plurality of sound sources, a plurality of first sound signals corresponding to respective ones of the plurality of subwoofers..

A computer program according to one aspect (aspect 11) of the present disclosure causes a computer system to function as: a sound source assigner configured to assign each of a plurality of sound sources that correspond to different positions, to one or more subwoofers installed in an acoustic space, in which each of the plurality of sound sources is assigned based on a positional relation between each of the plurality of sound sources and a plurality of subwoofers installed in the acoustic space and including the one or more subwoofers; and a signal processor configured to, based on results of assignment by the sound source assigner, generate, from a plurality of sound source signals corresponding to respective ones of the plurality of sound sources, a plurality of first sound signals corresponding to respective ones of the plurality of subwoofers.

An audio system according to one aspect (aspect 12) of the present disclosure includes: a plurality of subwoofers installed in an acoustic space; and a signal processing device, in which the signal processing device comprises: a sound source assigner configured to assign each of a plurality of sound sources that correspond to different positions, to one or more subwoofers installed in an acoustic space, in which each of the plurality of sound sources is assigned based on a positional relation with each of the plurality of sound sources and a plurality of subwoofers installed in the acoustic space and including the one or more subwoofers; and a first sound processor configured to, based on results of assignment by the sound source assigner, generate, from a plurality of sound source signals corresponding to respective ones of the plurality of sound sources, a plurality of first sound signals corresponding to respective ones of the plurality of subwoofers.

### Description of Reference Signs

100 audio system
10 acoustic space
12 listening area
14_k sound source
16_h unit space
20 signal supply device
30 signal processing device
31 control device
32 storage device
33 display device
34 input device
41_m main speaker
42_n subwoofer
43 subwoofer
50 audio processor
51 sound source assigner
52 signal processor
54 amplifier
60 bass processor
61 sound source assigner
62 signal processor
63 filter
64 amplifier
70 reverberation processor
71 early reflection sound generator
72 rear reverberation sound generator
721 space assigner
722 signal processor
723 signal processor
73 adder
81 adder
82 adder
90 bass processor

## Claims

1. A signal processing method implemented by a computer system, the signal processing method comprising:
assigning each of a plurality of sound sources that correspond to different positions, to one or more subwoofers installed in an acoustic space, wherein each of the plurality of sound sources is assigned based on a positional relation between each of the plurality of sound sources and a plurality of subwoofers installed in the acoustic space and including the one or more subwoofers; and
based on results of assignment of each of the plurality of sound sources, generating, from a plurality of sound source signals corresponding to respective ones of the plurality of sound sources, a plurality of first sound signals corresponding to respective ones of the plurality of subwoofers.

2. The signal processing method according to claim 1, further comprising generating from the plurality of sound source signals, a plurality of second sound signals corresponding to respective ones of a plurality of main speakers.

3. The signal processing method according to claim 2, further comprising:
generating, from the plurality of sound source signals, a plurality of first reverberation signals corresponding to the respective ones of the plurality of subwoofers; and
for each of the plurality of subwoofers, adding a corresponding first sound signal from among the plurality of the first sounds signals generated and a corresponding first reverberation signal from among the plurality of first reverberation signal generated.

4. The signal processing method according to claim 3, further comprising:
generating, from the plurality of sound source signals, a plurality of second reverberation signals corresponding to respective ones of the plurality of the main speakers; and
for each of the plurality of the main speakers, adding a corresponding second signal from among the plurality of the second sound signals generated and a corresponding second reverberation signal from among the plurality of second reverberation signals generated.

5. The signal processing method according to claim 4, wherein:
a reverberation sound represented by the plurality of second reverberation signals includes an early reflected sound and a rear reverberation sound corresponding to a sound represented by the plurality of sound source signals, and
a reverberation sound represented by the plurality of first reverberation signals includes the rear reverberation sound and does not include the early reflected sound.

6. The signal processing method according to any one of claims 1 to 5, wherein the assigning of each of the plurality of sound sources includes assigning the sound source to a subwoofer closest to the sound source from among the plurality of subwoofers.

7. The signal processing method according to any one of claims 1 to 5, wherein the assigning of each of the plurality of sound sources includes assigning the sound source to two or more subwoofers from among the plurality of subwoofers based on a distance from the sound source.

8. The signal processing method according to any one of claims 1 to 5,
wherein the assigning of each of the plurality of sound sources includes:
dividing the plurality of sound sources into a plurality of groups; and
assigning one or more sound sources belonging to each of the plurality of groups, to one or more subwoofers based on a positional relation between the plurality of subwoofers and each of the plurality of the groups.

9. The signal processing method according to any one of claims 1 to 5,
wherein the assigning of each of the plurality of sound sources includes:
acquiring a sound pressure distribution for each of the plurality of subwoofers; and
assigning each of the plurality of sound sources to one or more subwoofers from among the plurality of subwoofers, wherein each of the plurality of sound sources is assigned based on a positional relation between each of the plurality of sound sources and the sound pressure distribution acquired for each of the plurality of subwoofers.

10. A signal processing device comprising:
a sound source assigner configured to assign each of a plurality of sound sources that correspond to different positions, to one or more subwoofers installed in an acoustic space, wherein each of the plurality of sound sources is assigned based on a positional relation between each of the plurality of sound sources and a plurality of subwoofers installed in the acoustic space and including the one or more subwoofers; and
a signal processor configured to, based on results of assignment by the sound source assigner, generate, from a plurality of sound source signals corresponding to respective ones of the plurality of sound sources, a plurality of first sound signals corresponding to respective ones of the plurality of subwoofers.

11. A computer program configured to cause a computer system to function as:
a sound source assigner configured to assign each of a plurality of sound sources that correspond to different positions, to one or more subwoofers installed in an acoustic space, wherein each of the plurality of sound sources is assigned based on a positional relation between each of the plurality of sound sources and a plurality of subwoofers installed in the acoustic space and including the one or more subwoofers; and
a signal processor configured to, based on results of assignment by the sound source assigner, generate, from a plurality of sound source signals corresponding to respective ones of the plurality of sound sources, a plurality of first sound signals corresponding to respective ones of the plurality of subwoofers.

12. An audio system comprising:
a plurality of subwoofers installed in an acoustic space; and
a signal processing device, wherein
the signal processing device comprises:
a sound source assigner configured to assign each of a plurality of sound sources that correspond to different positions, to one or more subwoofers installed in an acoustic space, wherein each of the plurality of sound sources is assigned based on a positional relation with each of the plurality of sound sources and a plurality of subwoofers installed in the acoustic space and including the one or more subwoofers; and
a first sound processor configured to, based on results of assignment by the sound source assigner, generate, from a plurality of sound source signals corresponding to respective ones of the plurality of sound sources, a plurality of first sound signals corresponding to respective ones of the plurality of subwoofers.
